# EUROPÄISCHE PATENTSCHRIFT

(11) **EP 1 293 693 B1**
(45) Veröffentlichungstag und Bekanntmachung des Hinweises auf die Patenterteilung: **13.09.2006**
(21) Anmeldenummer: 02016055.2
(22) Anmeldetag: 19.07.2002
(51) Int. Cl.: F16D 9/06, A01B 71/06, A01B 61/02

(54) **Sicherheitskupplungsanordnung in einem Antrieb für Landmaschinen**
Safety clutch device for agricultural machine drive
Dispositif d'accouplement de sécurité pour entraînement de machine agricole

(30) Priorität: 12.09.2001 DE 10145012
(43) Veröffentlichungstag der Anmeldung: 19.03.2003
(73) Patentinhaber: GKN Walterscheid GmbH, 53797 Lohmar (DE)
(72) Erfinder: Schott, Wilhelm, Dipl.Ing., 50996 Köln (DE)
(74) Vertreter: Harwardt, Günther

(56) Entgegenhaltungen:
- DE-A- 3 344 043
- US-A- 4 758 109

## Beschreibung

Die Erfindung betrifft eine Antriebsanordnung, insbesondere für Landmaschinen mit drehend angetriebenen Massen, mit
- einer Scherbolzenkupplung, die
   eine Längsachse und
   eine Kupplungsnabe mit einem Lagersitz und einem radial bezüglich der Längsachse vorstehenden ersten Ansatz und erste Anschlussmittel aufweist,
- eine Kupplungshülse, die auf dem Lagersitz der Kupplungsnabe relativ zu dieser drehbar gelagert ist und einen radial zur Längsachse verlaufenden zweiten Ansatz und zweite Anschlussmittel aufweist,
- einen Scherbolzen, der in zueinander ausgerichteten Aufnahmebohrungen des ersten Ansatzes und des zweiten Ansatzes aufgenommen ist und diese in Drehrichtung um die Längsachse fest miteinander verbindet, wobei die Aufnahmebohrungen radial zur Längsachse versetzt angeordnet sind.

Im Antriebsstrang von landwirtschaftlichen Geräten, die von einem Traktor gezogen und über dessen Zapfwelle angetrieben werden oder aber auch bei selbstfahrenden landwirtschaftlichen Arbeitsmaschinen werden, ausgehend von einem zentralen Antrieb, verschiedene Funktionsabschnitte des Gerätes über ein verzweigtes Antriebssystem angetrieben. In diesen Antriebssystemen sind, um Überlastungen zu vermeiden, Kupplungen angeordnet.

Die US 4 758 109 betrifft eine Scherbolzenkupplung mit einer Kupplungsnabe, die einen Lagersitz für eine Kupplungshülse bildet. Die Lagerung der Kupplungshülse auf der Kupplungsnabe erfolgt mittels in gegenüberliegenden Rillen der beiden geführten Wälzkörper in Form von Kugeln. Die Kupplungshülse und die Kupplungsnabe weisen flanschartige Ausformungen auf, die mit miteinander korrespondierenden und parallel zur Längsachse verlaufenden Aufnahmebohrungen versehen sind, durch welche ein Scherbolzen in Form einer Kopfschraube hindurchgeführt ist. Bei Überlast schert der Schaft der Kopfschraube ab, so dass Kupplungsnabe und Kupplungshülse frei zueinander rotieren können. Die Unterbrechung des Drehmomentflusses zwischen der Kupplungshülse und der Kupplungsnabe erfolgt ausschließlich im Falle der Überlast.

Die DE 33 44 043 C2 betrifft eine schaltbare Überlastkupplung mit einer Kupplungsnabe mit einem flanschartigen Ansatz, in dem umfangsverteilt Durchbrüche vorhanden sind, in denen Mitnehmer in Form von Kugeln aufgenommen sind. Auf der Kupplungsnabe ist eine Kupplungshülse mittels Wälzkörpern drehbar gelagert. Diese Kupplungshülse weist den Durchbrüchen in der Kupplungsnabe gegenüberliegend Vertiefungen auf, in welche die Mitnehmer in Form der Kugeln in Drehmomentübertragungsposition eingreifen. Auf der der Kupplungshülse abgewandten Seite des flanschartigen Abschnitts der Kupplungsnabe ist ein Schaltring drehbar und axial verschiebbar gegen ein Federpaket abgestützt angeordnet. Der Schaltring weist entsprechend den Durchbrüchen in dem Flansch der Kupplungsnabe umfangsverteilt Ausnehmungen auf, die jedoch in Drehmomentübertragungsposition in Umfangsrichtung um die Längsachse zu den Durchbrüchen der Kupplungsnabe verdreht sind, so dass sich die Mitnehmer in Form der Kugeln gegen eine ebene Fläche des Schaltringes abstützen und von diesem unter der Wirkung der ihn beaufschlagenden Federn in Eingriff zu den Ausnehmungen der Kupplungshülse gehalten werden, so dass eine Drehmomentübertragung zwischen der Kupplungsnabe und der Kupplungshülse erfolgen kann. Zusätzlich weisen Kupplungsnabe und Schaltring Nocken auf, zu denen der Schaltnocken einer Schaltklinke in Eingriff gebracht werden kann, wobei zunächst der Schaltnocken des Schaltringes auf die Schaltklinke auftrifft, so dass dieser relativ zu der zunächst weiterdrehenden Kupplungsnabe umfangsverstellt wird, damit die Mitnehmer aus der Drehmomentübertragungsposition austreten und in die Vertiefungen des Schaltringes eintreten können. Nach Durchmessen eines bestimmten Relativweges in Umfangsrichtung kommt jedoch die Schaltklinke mit dem Anschlagnocken der Kupplungsnabe in Wirkverbindung und setzt damit die Kupplungsnabe fest. Damit werden die drehenden Massen der angetriebenen Maschine oder des angetriebenen Maschinenabschnittes abrupt abgestoppt. Lediglich die Kupplungshülse, die mit einem nicht dargestellten Antrieb verbunden ist und den treibenden Teil der Kupplung darstellt, kann weiter rotieren. Die Kupplung beruht auf einem anderen Prinzip als die Scherbolzenkupplung. Es ist eine Kupplung, die bei einer bestimmten Überlast selbsttätig abschaltet, ohne dass die Mitnehmer zerstört werden. Zusätzlich ist eine Abschaltmöglichkeit mittels der Schaltklinke vorgesehen.

Bei einigen Funktionsbereichen, bei denen die Gefahr besteht, dass Verstopfungen beim Einsatz auftreten, ist erforderlich, das die Verstopfung verursachende Gut zu entfernen. Dabei muss der Bediener entweder den Antrieb reversieren und wenn damit kein Freifahren erfolgt, von Hand in die noch in Betrieb befindliche Maschine bzw. in Betrieb befindlichen und angetriebenen Funktionsabschnitte greifen. Hierdurch besteht Verletzungsgefahr. Daher ist normalerweise der Antrieb zunächst still zu setzen.

Der Erfindung liegt die Aufgabe zugrunde, eine Antriebsanordnung vorzuschlagen, bei der von Hand oder durch eine Betätigungseinrichtung eine Trennung vom Antrieb erfolgen kann und eine sichere Führung der Bauteile erfolgt.

Gelöst wird diese Aufgabe erfindungsgemäß dadurch,
dass die Kupplungsnabe, zusätzlich eine Sitzfläche aufweist, die axial zwischen dem ersten Ansatz und dem Lagersitz angeordnet ist,
dass der erste Ansatz radial bezüglich der Längsachse über die Sitzfläche vorsteht,
dass ein Klinkenrad vorgesehen ist, das mit einer Lagerbohrung auf der Sitzfläche der Kupplungsnabe relativ drehbar zu dieser gelagert ist und mindestens eine Haltefläche aufweist, und welches eine zu den Aufnahmebohrungen des ersten Ansatzes und des zweiten Ansatzes ausgerichtete Aufnahmebohrung aufweist, durch die der Scherbolzen ebenfalls hindurchgeführt ist, so dass der erste Ansatz, der zweite Ansatz und das Klinkenrad in Drehrichtung fest miteinander verbunden sind und bei abruptem Abstoppen des Klinkenrades (20) der Scherbolzen (26) an mindestens einer von zwei im Anlagebereich des Klingenrades (20) mit dem ersten Ansatz (8) und dem zweiten Ansatz (17) gebildeten Scherflächen abschert,
dass eine Sperreinrichtung vorgesehen ist, die ein Sperrelement aufweist, welches in einer inaktiven Stellung gehalten und manuell unmittelbar oder durch eine Betätigungseinrichtung aus dieser Stellung in Anlage zur Haltefläche des Klinkenrades verlagerbar ist, so dass die Drehbewegung des Klinkenrades gestoppt wird.

Durch die erfindungsgemäße Lösung wird eine Antriebsanordnung bereitgestellt, bei der eine Scherbolzenkupplung genutzt werden kann, um den Antrieb durch Eingriff von außen von dem anzutreibenden Funktionsabschnitt der Landmaschine zu trennen. Dies kann manuell geschehen, indem über eine Reißleine oder ein Hebelgestenge das Sperrelement der Sperreinrichtung von der inaktiven Stellung in die aktive Stellung in Anlage zur Haltefläche des Klinkenrades verlagert wird. Dabei kann die Reißleine beispielsweise über einen Bowdenzug auf das Sperrelement einwirken. Es ist jedoch auch eine andere Betätigungseinrichtung wählbar, die selbsttätig die Sperrfunktion auslöst, wenn z.B. in einer Landmaschine eine Abdeckung geöffnet wird. Die Drehmomentübertragung kann wissentlich nur dadurch wieder hergestellt werden, indem ein neuer Scherbolzen eingesetzt wird. Durch die erfindungsgemäßen Maßnahmen wird es möglich, eine an sich bekannte Scherbolzenkupplung zusätzlich mit einer Abschaltfunktion zu versehen.

In Ausgestaltung der Erfindung ist vorgesehen, dass der Lagersitz der Kupplungsnabe durch eine erste Laufrille dargestellt ist, welche Lagerkugeln aufnimmt, auf denen die Kupplungshülse mit einer zweiten Laufrille um die Längsachse relativ zur Kupplungsnabe drehbar gelagert ist. Hierdurch wird gewährleistet, dass die Relativbewegung zwischen Kupplungsnabe und Kupplungshülse mit einer geringen Reibung erfolgt.

Vorzugsweise wird die Haltefläche von einem Vorsprung gebildet, der sich auf dem Umfang des Klinkenrades befindet. Dabei sind Vorzugsweise mehrere Halteflächen auf dem Umfang des Klinkenrades verteilt angeordnet, um die Ansprechzeit möglichst kurz zu halten.

Günstig ist eine Ausgestaltung, bei der das Sperrelement durch eine Sperrklinke dargestellt ist, die durch eine Feder in der inaktiven Stellung gehalten ist und gegen die Kraft der Feder mit einer Sperrfläche in Anlage zur Haltefläche schwenkbar ist. Dabei ist es möglich, die Sperrklinke so anzuordnen, dass die Kräfte, die durch das abrupte Abstoppen des Klinkenrades in die Sperrklinke eingeleitet werden, unmittelbar in das Schwenklager einzuleiten, so dass die Sperrklinke nicht ausweichen kann.

Anstelle der Betätigung der Sperrklinke von Hand über einen entsprechenden Hebeltrieb, Bowdenzug oder Seilzug kann diese auch durch einen Kraftantrieb betätigbar sein. Dabei ist es möglich, den Kraftantrieb durch einen Sensor zu steuern, der beispielsweise das Eingreifen von Hand in einen Maschinenbereich, der eine Gefahr für die Bedienungsperson bedeutet, als Auslösekriterium registriert. Vorzugsweise wird als Scherbolzen eine Kopfschraube mit Mutter verwendet, welche die Kupplungshülse, die Kupplungsnabe und das Klinkenrad fest miteinander verbindet und radial versetzt und parallel zur Längsachse angeordnet ist. Je nach Anwendungsfall kommen als erste Anschlussmittel eine profilierte und auf der Längsachse zentrierte Bohrung in der Kupplungsnabe oder ein Flansch, der mit der Kupplungsnabe verbunden ist, in Frage. Dabei kann die Bohrung vorzugsweise verzahnt sein, um mit einem entsprechend profilierten Zapfen verbunden zu werden. Für den Fall, dass die Antriebsanordnung in ein Antriebssystem mit Gelenkwellen integriert werden soll, können die zweiten Anschlussmittel durch eine Gelenkgabel eines Kreuzgelenkes oder aber auch durch einen Flansch dargestellt sein.

Ein bevorzugtes Ausführungsbeispiel der Antriebsanordnung und deren Zuordnung zu einem Verteilergetriebe ist in der Zeichnung schematisch dargestellt.

Es zeigt
- Figur 1: eine Ansicht einer Scherbolzenkupplung, teilweise geschnitten,
- Figur 2: eine Seitenansicht zur Figur 1, wobei die Zuordnung der Sperreinrichtung zusätzlich dargestellt ist,
- Figur 3: einen Schnitt III-III gemäss Figur 1 und
- Figur 4: die Zuordnung der erfindungsgemäßen Antriebsanordnung zu einem Verteilergetriebe eines Antriebssystem einer Landmaschine.

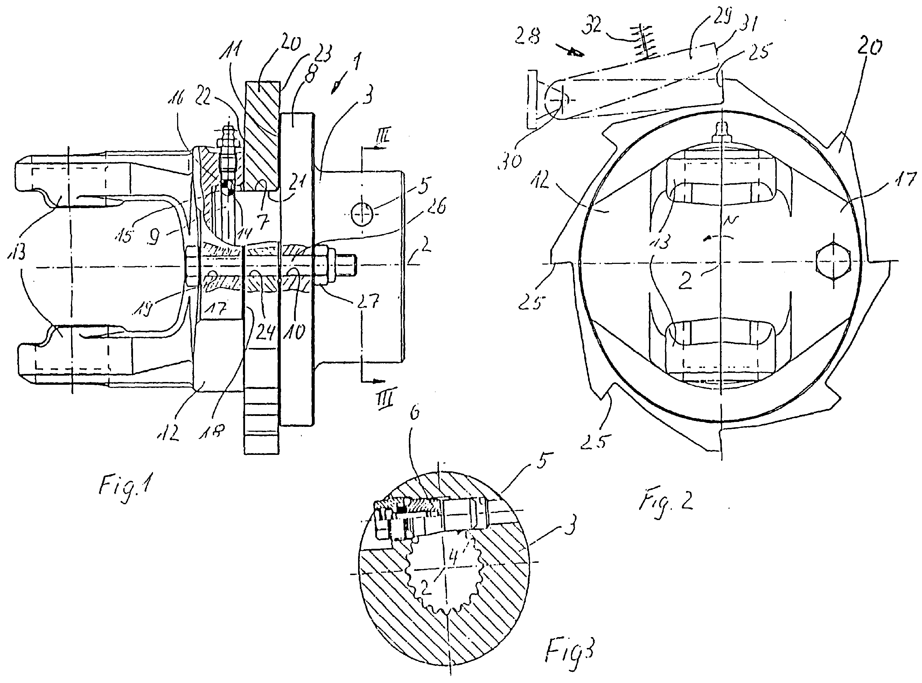

Nachfolgend werden zunächst die Figuren 1 bis 3 zusammen beschrieben.

Die erfindungsgemäße Antriebsanordnung umfasst eine Scherbolzenkupplung 1. Diese besitzt die Längsachse 2, welche auch die Drehachse für die Scherbolzenkupplung 1 darstellt. Die Scherbolzenkupplung 1 umfasst eine Kupplungsnabe 3, die eine auf der Längsachse 2 zentrierte Bohrung 4 besitzt, die mit einer Verzahnung versehen ist, wie insbesondere der Figur 3 zu entnehmen ist. Quer zur Bohrung 4 ist eine Querbohrung 5 angeordnet, die die Bohrung 4 schneidet und in welche ein Spannelement 6 einschraubbar ist. Mit diesem ist die Kupplungsnabe 3 beispielsweise auf einer entsprechend außenverzahnten Welle eines Verteilergetriebes festlegbar.

Die Kupplungsnabe 3 besitzt ferner eine Sitzfläche 7, die von einem über diese radial vorstehenden ersten Ansatz 8, der flanschartig ausgebildet ist, ausgeht. Sie endet in einer ersten Laufrille 9, die einen Lagersitz darstellt. Die erste Laufrille 9 ist in Form einer Ringnut gestaltet, die auf der Längsachse 2 zentriert ist. Die Kupplungsnabe 3 umfasst ferner radial zur Längsachse 2 versetzt eine parallel zur Längsachse verlaufende und sich durch den ersten Ansatz 8 erstreckende erste Aufnahmebohrung 10.

Der erste Ansatz 8 bildet in Richtung zur ersten Laufrille 9 eine erste Anlagefläche 11. Die Scherbolzenkupplung 1 umfasst ferner eine Kupplungshülse 12, die beim vorliegenden Ausführungsbeispiel die Gelenkgabel 13 mit ihren beiden Gabelarmen umfasst. Diese stellt einen Teil eines Kreuzgelenkes dar, das Bestandteil einer Antriebswelle ist. Die Kupplungshülse 12 besitzt ferner eine Bohrung 15, in der eine zweite Laufrille 14 in Form einer Ringnut um die Längsachse 2 angeordnet ist. Die Kupplungshülse 12 übergreift mit ihrer Bohrung 15 den die Sitzfläche 7 aufweisenden Abschnitt der Kupplungshülse 3 derart, dass die erste Laufrille 9 der zweiten Laufrille 14 gegenüber liegt. Beide zusammen nehmen Lagerkugeln 16 auf, so dass die Kupplungshülse 12 und die Kupplungsnabe 3 relativ zueinander drehbar sind. Die Kupplungshülse 12 besitzt ferner einen zweiten Ansatz 17, in dem eine zur Längsachse 2 entsprechend der ersten Aufnahmebohrung 10 im ersten Ansatz 8 angeordnete zweite Aufnahmebohrung 19 vorhanden ist, die parallel zur Längsachse 2 verläuft. Ferner bildet der zweite Ansatz 17 bzw. die Kupplungshülse 12 in Richtung zum ersten Ansatz 8 der Kupplungsnabe 3 eine zweite Anlagefläche 18.

Des weiteren umfasst die Scherbolzenkupplung 1 ein Klinkenrad 20, das eine Lagerbohrung 21 aufweist, die auf der Längsachse 2 zentriert ist. Das Klinkenrad 20 besitzt ferner eine erste Stirnfläche 22 und eine zweite Stirnfläche 23. Es ist mit der Lagerbohrung 21 auf der Sitzfläche 7 der Kupplungsnabe 3 drehbar gelagert und in Richtung der Längsachse 2 mit ihrer ersten Stirnfläche 22 gegen die zweite Anlagefläche 18 und mit ihrer zweiten Stirnfläche 23 gegen die erste Anlagefläche 11 der Kupplungsnabe 3 anliegend gehalten. Das Klinkenrad 20 besitzt ferner auf seinem Umfang mehrere vorstehende Nocken mit Halteflächen 25, die radial zur Längsachse 2 verlaufen. Im radialen Abstand zur Längsachse 2 ist eine dritte Aufnahmebohrung 24 angeordnet, die ebenfalls parallel zur Längsachse 2 verläuft und deren Längsachse mit denen der ersten Aufnahmebohrung 10 und der zweiten Aufnahmebohrung 19 identisch ist. Durch die Aufnahmebohrungen 10, 19, 24 ist ein Scherbolzen in Form einer Kopfschraube 26 hindurchgeschoben, welche darüber hinaus die Kupplungsnabe 3, das Klinkenrad 2 und die Kupplungshülse 12 durch eine Mutter 27 verspannt. Vorzugsweise ist die Kopfschraube 26 spielfrei in den Aufnahmebohrungen 10, 9, 24 aufgenommen. Hierdurch werden die Kupplungsnabe 3, die Kupplungshülse 12 und das Klinkenrad 20 drehfest miteinander verbunden, so dass sie sich bei drehendem Antrieb über die Gelenkgabel 13 um die Längsachse 2 miteinander drehen müssen.

Die Antriebsanordnung gemäß der Erfindung umfasst neben der vorbeschriebenen Scherbolzenkupplung 1 auch eine Sperreinrichtung 28, die insbesondere aus Figur 2 ersichtlich ist. Diese Sperreinrichtung 28 weist ein Sperrelement in Form einer Sperrklinke 29 auf, die an einem ortsfest angeordneten Lager um die Schwenkachse 30 schwenkbar angeordnet ist. Die Sperrklinke 29 wird durch eine Feder 32 in einer inaktiven, d.h. ausgerückten Position ihrer Sperrfläche 31 zu den Halteflächen 25 des Klinkenrades 20 gehalten. Sie kann durch eine nicht dargestellte Betätigung so um die Schwenkachse 30 verschwenkt werden, dass ihre Sperrfläche 31 in den Bewegungsbereich der Haltefläche 25 des drehenden Klinkenrades 20 bei Antrieb in Drehrichtung N bewegt wird, so dass das Klinkenrad 20 abrupt gestoppt wird. Dies hat zur Folge, dass die Kopfschraube 26 an mindestens einer der beiden im Anlagebereich des Klinkenrades 20 mit dem ersten Ansatz 8 bzw. dem zweiten Ansatz 17 gebildeten Scherflächen abschert, so dass die Drehmomentübertragung zwischen der Kupplungsnabe 3 und der Kupplungshülse 12 bzw. von der Kupplungshülse 12 zur Kupplungsnabe 3 unterbrochen ist.

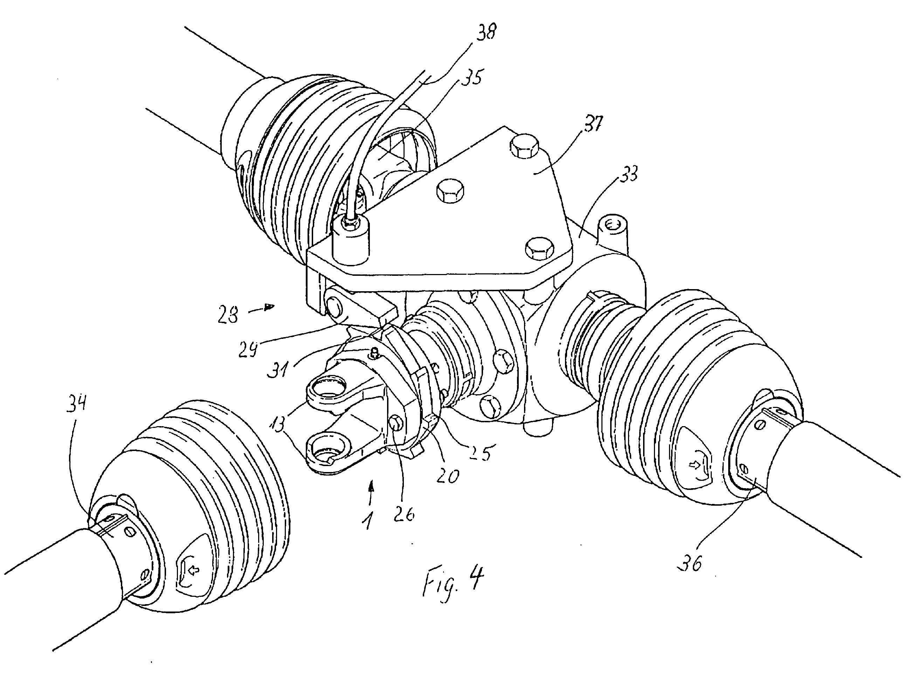

In Figur 4 ist die Antriebsanordnung in Zuordnung zu einem Verteilergetriebe eines Antriebssystems für eine Landmaschine dargestellt. Das Verteilergetriebe ist mit 33 bezeichnet. Es ist beispielsweise an einem nicht dargestellten Maschinenrahmen befestigt. Der Antrieb erfolgt über die Antriebswelle 34 und über die Scherbolzenkupplung 1. Das somit in das Verteilergetriebe 33 eingeleitete Drehmoment verteilt sich auf die beiden Abtriebswellen 36, 38. Es ist in Figur 4 die Zuordnung der Scherbolzenkupplung 1 getrennt von der Antriebswelle 34 dargestellt, um den Blick auf die Scherbolzenkupplung 1 und insbesondere die Sperreinrichtung 28 nicht zu verdecken. Dem Verteilergetriebe 33 ist eine Konsole 37 zugeordnet, an welcher die Sperrklinke 29 der Sperreinrichtung 28 schwenkbar gelagert ist. Es ist ferner die Zuordnung der Sperrklinke 29 mit ihrer Sperrfläche 31 zu der Haltefläche 25 des Klinkenrades 20 erkennbar. Ferner ist auch die als Scherbolzen dienende Kopfschraube 26 erkennbar. An der Konsole 37 endet auch die Betätigungseinrichtung 38, die ein Stellelement umfasst, das auf die Sperrklinke 29 unmittelbar einwirkt. Dieses Stellelement selbst kann beispielweise durch einen Bowdenzug, einen Betätigungshebel bzw. eine Reißleine aktiviert werden oder aber auch selbst in Form eines Kraftantriebs, der elektrisch, pneumatisch oder hydraulisch betrieben wird, dargestellt sein und entsprechend über Leitungen mit einem Betätigungsschalter, einem Betätigungsventil oder einem Sensor zur Auslösung der Aktivierung verbunden sein.

### Bezugszeichenliste

- 1: Scherbolzenkupplung
- 2: Längsachse
- 3: Kupplungsnabe
- 4: Bohrung
- 5: Querbohrung
- 6: Spannelement
- 7: Sitzfläche
- 8: erster Ansatz
- 9: erste Laufrille / Lagersitz
- 10: erste Aufnahmebohrung
- 11: erste Anlagefläche
- 12: Kupplungshülse
- 13: Gelenkgabel / zweite Anschlussmittel
- 14: zweite Laufrille
- 15: Bohrung
- 16: Lagerkugel
- 17: zweiter Ansatz
- 18: zweite Anlagefläche
- 19: zweite Aufnahmebohrung
- 20: Klinkenrad
- 21: Lagerbohrung
- 22: erste Stirnfläche
- 23: zweite Stirnfläche
- 24: dritte Aufnahmebohrung
- 25: Haltefläche
- 26: Scherbolzen / Kopfschraube
- 27: Mutter
- 28: Sperreinrichtung
- 29: Sperrklinke / Sperrelement
- 30: Schwenkachse
- 31: Sperrfläche
- 32: Feder
- 33: Verteilergetriebe
- 34: Antriebswelle
- 35: erste Abtriebswelle
- 36: zweite Abtriebswelle
- 37: Konsole
- 38: Betätigungseinrichtung

## Patentansprüche

1. Antriebsanordnung, insbesondere für Landmaschinen mit drehend angetriebenen Massen, mit
einer Scherbolzenkupplung (1), die eine Längsachse (2) und eine Kupplungsnabe (3) mit einem Lagersitz (9) und einem radial bezüglich der Längsachse (2) vorstehenden ersten Ansatz (8) und erste Anschlussmittel (4) aufweist,
einer Kupplungshülse (12), die auf dem Lagersitz (9) der Kupplungsnabe (3) relativ zu dieser drehbar gelagert ist und einen radial zur Längsachse (2) verlaufenden zweiten Ansatz (17) und zweite Anschlussmittel (13) aufweist,
einem Scherbolzen (26), der in zueinander ausgerichteten Aufnahmebohrungen (10, 19) des ersten Ansatzes (8) und des zweiten Ansatzes (17) aufgenommen ist und diese in Drehrichtung um die Längsachse (2) fest miteinander verbindet, wobei die Aufnahmebohrungen (10, 19) radial zur Längsachse (2) versetzt angeordnet sind,
**dadurch gekennzeichnet,**
**dass** die Kupplungsnabe (3) zusätzlich eine Sitzfläche (7) aufweist, die axial zwischen dem ersten Ansatz (8) und dem Lagersitz (9) angeordnet ist,
**dass** der erste Ansatz (8) radial bezüglich der Längsachse (2) über die Sitzfläche (7) vorsteht,
**dass** ein Klinkenrad (20) vorgesehen ist, das mit einer Lagerbohrung (21) auf der Sitzfläche (7) der Kupplungsnabe (3) relativ drehbar zu dieser gelagert ist und mindestens eine Haltefläche (25) aufweist, und welches eine zu den Aufnahmebohrungen (10, 19) des ersten Ansatzes (8) und des zweiten Ansatzes (17) ausgerichtete Aufnahmebohrung (24) aufweist, durch die der Scherbolzen (26) ebenfalls hindurchgeführt ist, so dass der erste Ansatz (8), der zweite Ansatz (17) und das Klinkenrad (20) in Drehrichtung fest miteinander verbunden sind und bei abruptem Abstoppen des Klinkenrades (20) der Scherbolzen (26) an mindestens einer von zwei im Anlagebereich des Klingenrades (20) mit dem ersten Ansatz (8) und dem zweiten Ansatz (17) gebildeten Scherflächen abschert,
**dass** eine Sperreinrichtung (28) vorgesehen ist, die ein Sperrelement (29) aufweist, welches in einer inaktiven Stellung gehalten und manuell unmittelbar oder **durch** eine Betätigungseinrichtung aus dieser Stellung in Anlage zur Haltefläche (25) des Klinkenrades (20) verlagerbar ist, so dass die Drehbewegung des Klinkenrades (20) gestoppt wird.

2. Antriebsanordnung nach Anspruch 1,
**dadurch gekennzeichnet,**
**dass** der Lagersitz der Kupplungsnabe (3) durch eine erste Laufrille (9) dargestellt ist, welche Lagerkugeln (16) aufnimmt, auf denen die Kupplungshülse (12) mit einer zweiten Laufrille (14) um die Längsachse (2) relativ zur Kupplungsnabe (3) drehbar gelagert ist.

3. Antriebsanordnung nach Anspruch 1,
**dadurch gekennzeichnet,**
**dass** die Haltefläche (25) von einem Vorsprung auf dem Umfang des Klinkenrades (20) gebildet ist.

4. Antriebsanordnung nach Anspruch 3,
**dadurch gekennzeichnet,**
**dass** mehrere Halteflächen (25) auf dem Umfang des Klinkenrades (20) verteilt angeordnet sind.

5. Antriebsanordnung nach Anspruch 1,
**dadurch gekennzeichnet,**
**dass** das Sperrelement als Sperrklinke (29) gestaltet ist, die durch eine Feder (32) in der inaktiven Stellung gehalten ist und gegen die Kraft der Feder (32) mit einer Sperrfläche (31) in Anlage zur Haltefläche (25) schwenkbar ist.

6. Antriebsanordnung nach Anspruch 1,
**dadurch gekennzeichnet,**
**dass** die Sperrklinke (29) durch einen Kraftantrieb betätigbar ist.

7. Antriebsanordnung nach Anspruch 6,
**dadurch gekennzeichnet,**
**dass** der Kraftantrieb durch einen Sensor gesteuert ist.

8. Antriebsanordnung nach Anspruch 1,
**dadurch gekennzeichnet,**
**dass** der Scherbolzen durch eine Kopfschraube (26) mit Mutter (27) dargestellt ist.

9. Antriebsanordnung nach Anspruch 1,
**dadurch gekennzeichnet,**
**dass** die ersten Anschlussmittel durch eine profilierte und auf der Längsachse (2) zentrierte Bohrung (4) in der Kupplungsnabe (3) oder durch einen Flansch dargestellt sind.

10. Antriebsanordnung nach Anspruch 1,
**dadurch gekennzeichnet,**
**dass** die zweiten Anschlussmittel durch eine Gelenkgabel (13) für ein Kreuzgelenk oder durch einen Flansch dargestellt sind.

## Claims

1. A drive assembly, more particularly for land machinery with rotatingly driven masses, having
a shear pin coupling (1) comprising a longitudinal axis (2) and a coupling hub (3) with a bearing seat (9) and a first projection (8) projecting radially relative to the longitudinal axis (2), a well as first attaching means (4);
a coupling sleeve (12) which is supported on the bearing seat (9) of the coupling hub (3) so as to be rotatable relative to the coupling hub (3) and a second projection (17) extending radially relative to the longitudinal axis (2), as well as second attaching means (13);
a shear pin (26) which is received in receiving bores (10, 19) of the first projection (8) and of the second projection (17), said receiving bores (10, 19) being aligned relative to one another, and which firmly connects said in the direction of rotation around the longitudinal axis (2), wherein the receiving bores (10, 19) are arranged so as to be radially offset relative to the longitudinal axis (2),
**characterised in**
**that** the coupling hub (3), in addition, comprises a seat face (7) which is arranged axially between the first projection (8) and the bearing seat (9),
**that** the first projection (8), with reference to the longitudinal axis (2), project radially beyond the seat face (7),
**that** there is provided a ratchet wheel (20) which is supported by means of a bearing bore (21) on the seat face (7) of the coupling hub (3) so as to be rotatable relative thereto and comprises at least one holding face (25) and which, furthermore, comprises a receiving bore (24) which is aligned relative to the receiving bores (10, 19) of the first projection (8) and of the second projection (17) and through which the shear pin also passes, so that the first projection (8), the second projection (17) and the ratchet wheel (20) are firmly connected to one another in the direction of rotation and that, if the ratchet wheel (20) suddenly stops, the shear pin (26) shears at at least one of two shear faces formed in the region of contact of the ratchet wheel (20) with the first projection (8) and with the second projection (17);
**that** there is provided a locking device (28) which comprises a locking element (29) which is held in an inactive position and which is displaceable
manually directly or by an actuating device out of this position into contact with the holding face (25) of the ratchet wheel (20), so that the rotational movement of the ratchet wheel (20) is stopped.

2. A drive assembly according to claim 1,
**characterised in**
**that** the bearing seat of the coupling hub (3) is provided in the form of a first running groove (9) which receives bearing balls (16) on which the coupling sleeve (12) with a second running groove (14) is rotatably supported around the longitudinal axis (2) relative to the coupling hub (3).

3. A drive assembly according to claim 1,
**characterised in**
**that** the holding face (25) is formed by a projection on the circumference of the ratchet wheel (20).

4. A drive assembly according to claim 3,
**characterised in**
**that** a plurality of holding faces (25) is arranged so as to be distributed on the circumference of the ratchet wheel (20).

5. A drive assembly according to claim 1
**characterised in**
**that** the locking element is provided in the form of a locking ratchet (29) which is held by a spring (32) in the inactive position and which, against the force of the spring (32), by means of a locking face (31), can be pivoted into contact with the holding face (25).

6. A drive assembly according to claim 1,
**characterised in**
**that** the locking ratchet (29) can be actuated by a power drive.

7. A drive assembly according to claim 6,
**characterised in**
**that** the power drive is controlled by a sensor.

8. A drive assembly according to claim 1,
**characterised in**
**that** the shear pin is provided in the form of a head screw (26) with a nut (27).

9. A drive assembly according to claim 1,
**characterised in**
**that** the first attaching means are provided in the form of a bore (4) in the coupling hub (3), which bore (4) is profiled and centred on the longitudinal axis (2), or in the form of a flange.

10. A drive assembly according to claim 1,
**characterised in**
**that** the second attaching means are provided in the form of a joint yoke (13) for a universal joint or in the form of a flange.

## Revendications

1. Dispositif d'entraînement, en particulier pour des machines agricoles avec des masses entraînées en rotation, avec
un accouplement à goujon de cisaillement (1) qui comprend un axe longitudinal (2) et un moyeu d'accouplement (3) avec un siège de palier (9) et un premier épaulement (8) faisant saillie radialement par rapport à l'axe longitudinal (2) et des premiers moyens de raccordement (4),
une douille d'accouplement (12) qui est logée sur le siège de palier (9) du moyeu d'accouplement (3) de manière rotative par rapport à ce dernier et qui comprend un deuxième épaulement (17) s'étendant radialement par rapport à l'axe longitudinal (2) et des deuxièmes moyens de raccordement (13),
un goujon de cisaillement (26) qui est logé dans des alésages de positionnement (10, 19) du premier épaulement (8) et du deuxième épaulement (17) alignés les uns sur les autres et qui relie ceux-ci les uns aux autres fixement dans la direction de rotation autour de l'axe longitudinal (2), les alésages de positionnement (10, 19) étant décalés radialement par rapport à l'axe longitudinal (2),
**caractérisé en ce que**
le moyeu d'accouplement (3) comprend, en outre, une surface d'appui (7) qui est disposée axialement entre le premier épaulement (8) et le siège de palier (9),
**en ce que** le premier épaulement (8) fait saillie au-dessus de la surface d'appui (7) radialement par rapport à l'axe longitudinal (2),
**en ce qu'**il est prévu une roue à cliquet (20) qui est logée avec un alésage de palier (21) sur la surface d'appui (7) du moyeu d'accouplement (3) de manière rotative par rapport à ce dernier et qui comprend au moins une surface de retenue (25) et qui comprend un alésage de positionnement (24) aligné sur les alésages de positionnement (10, 19) du premier épaulement (8) et du deuxième épaulement (17) à travers lequel passe également le goujon de cisaillement (26), de sorte que le premier épaulement (8), le deuxième épaulement (17) et la roue à cliquet (20) sont raccordés fixement les uns aux autres dans la direction de rotation et, en cas d'arrêt brusque de la roue à cliquet (20), le goujon de cisaillement (26) cisaille au moins sur l'une des deux surfaces de cisaillement formées dans la zone d'appui de la roue à cliquet (20) sur le premier épaulement (8) et le deuxième épaulement (17),
**en ce qu'**il est prévu un dispositif de verrouillage (28) qui comprend un élément de verrouillage (29) qui est maintenu dans une position inactive et qui est déplaçable manuellement directement ou à l'aide d'un dispositif d'actionnement à partir de cette position pour venir en appui sur la surface de retenue (25) de la roue à cliquet (20), de sorte que le mouvement de rotation de la roue à cliquet (20) est stoppé.

2. Dispositif d'entraînement selon la revendication 1,
**caractérisé en ce que**
le siège de palier du moyeu d'accouplement (3) est constitué par une première gorge de roulement (9) qui reçoit des billes de roulement (16) sur lesquelles la douille d'accouplement (12) avec une deuxième gorge de roulement (14) est logée en rotation autour de l'axe longitudinal (2) par rapport au moyeu d'accouplement (3).

3. Dispositif d'entraînement selon la revendication 1,
**caractérisé en ce que**
la surface de retenue (25) est formée par une partie en saillie sur la périphérie de la roue à cliquet (20).

4. Dispositif d'entraînement selon la revendication 3,
**caractérisé en ce que**
plusieurs surfaces de retenue (25) sont réparties sur la périphérie de la roue à cliquet (20).

5. Dispositif d'entraînement selon la revendication 1,
**caractérisé en ce que**
l'élément de verrouillage est configuré comme un cliquet de verrouillage (29) qui est maintenu en position inactive par un ressort (32) et qui peut pivoter contre la force du ressort (32) avec une surface de verrouillage (31) pour venir en appui sur la surface de retenue (25).

6. Dispositif d'entraînement selon la revendication 1,
**caractérisé en ce que**
le cliquet de verrouillage (29) peut être actionné par un entraînement motorisé.

7. Dispositif d'entraînement selon la revendication 6,
**caractérisé en ce que**
l'entraînement motorisé est commandé par un capteur.

8. Dispositif d'entraînement selon la revendication 1,
**caractérisé en ce que**
le goujon de cisaillement est constitué par une vis à tête (26) avec un écrou (27).

9. Dispositif d'entraînement selon la revendication 1,
**caractérisé en ce que**
les premiers moyens de raccordement sont constitués par un alésage (4) profilé et centré sur l'axe longitudinal (2) dans le moyeu d'accouplement (3) ou par une bride.

10. Dispositif d'entraînement selon la revendication 1,
**caractérisé en ce que**
les deuxièmes moyens de raccordement sont constitués par une chape articulée (13) pour un joint universel ou par une bride.
